Europäisches Patentamt

European Patent Office

Office européen des brevets

(19)

(11) Numéro de publication : **0 117 203 B1**

(12) **FASCICULE DE BREVET EUROPÉEN**

(45) Date de publication du fascicule du brevet :
15.04.87

(51) Int. Cl.⁴ : **F 16 F   9/36, F 16 J  15/32**

(21) Numéro de dépôt : **84400317.8**

(22) Date de dépôt : **16.02.84**

(54) Dispositif d'étanchéité pour dissipateur hydraulique d'énergie de type télescopique.

(30) Priorité : **18.02.83 FR 8302645**

(43) Date de publication de la demande :
**29.08.84 Bulletin 84/35**

(45) Mention de la délivrance du brevet :
**15.04.87 Bulletin 87/16**

(84) Etats contractants désignés :
**BE DE GB IT NL**

(56) Documents cités :
**DE-A- 2 845 243
DE-C-   650 195
DE-U- 1 985 796
DE-U- 6 804 551
FR-A- 1 491 446
FR-A- 2 070 542
FR-A- 2 296 799
FR-A- 2 426 841
FR-A- 2 453 337
GB-A- 1 269 055
US-A- 4 235 426
PATENTS ABSTRACTS OF JAPAN, vol. 6, no. 228 (M-171)[1106], 13 novembre 1982**

(73) Titulaire : **SOCIETE M T E Société anonyme
32, Quai de Dion Bouton
F-92800 Puteaux (FR)**

(72) Inventeur : **Katz, Maurice
71 rue Raynouard
F-75016 Paris (FR)**

(74) Mandataire : **Lejet, Christian et al
Société JEUMONT-SCHNEIDER 31-32, Quai de Dion Bouton
F-92811 Puteaux Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un dispositif d'étanchéité pour dissipateur hydraulique d'énergie de type télescopique, notamment pour les suspensions de matériel roulant de chemin de fer.

Pour de telles suspensions, on sait que les dispositifs amortisseurs connus, qui dissipent l'énergie mécanique en chaleur par laminage d'huile entraînée par un piston à travers des passages étranglés, ne réunissent pas en même temps toutes les caractéristiques souhaitées et restent surtout d'une fiabilité bien insuffisante.

En effet, les dispositifs amortisseurs les plus usuels, du type télescopique à piston actionné par une tige dans un tube de travail rempli d'huile, ne permettent généralement pas d'amortir convenablement les mouvements d'oscillation de faibles amplitudes ou vibrations engendrés par les roues, car ils se désamorcent facilement au repos et nécessitent ensuite de longs parcours avec oscillations de grande amplitude pour revenir à l'état normal de fonctionnement. Mais le piston aspire d'abord, dans chaque sens de mouvement, l'air dissous dans l'huile, ce qui crée au retour un vide qui est à l'origine du phénomène de cavitation se traduisant par des à-coups secs et violents particulièrement désagréables.

Pour remédier à ces inconvénients, on connaît des amortisseurs dans lequels on maintient une légère surpression permanente du liquide remplissante entièrement les chambres de travail, au moyen d'une chambre de compensation où le liquide de réserve est lui-même maintenu sous pression par des dispositifs mécaniques à ressort ou pneumatiques.

Mais dans le domaine des suspensions ferroviaires, on sait que les oscillations à amortir sont dans la majorité des cas des vibrations de faible amplitude avec, de temps en temps une ou plusieurs oscillations nettement plus importantes.

Il se pose donc autour de la tige du piston dans sa traversée de l'enveloppe de l'appareil, un problème d'étanchéité. En effet, si l'on utilise des joints à frottement important sur la tige, les petits mouvements d'oscillation sont transmis par les joints à l'ensemble de la caisse. On peut chercher à réduire un peu les frottements pour autoriser entre la tige et le joint, les mouvements de faible amplitude qui sont alors amortis par le travail du fluide dans les chambres ; mais dans ce cas les très nombreux mouvements d'oscillation vont entraîner une usure rapide des joints, et par conséquent des fuites d'huile qui, à leur tour, entraîneront une diminution de la pression permanente dans l'appareil et l'apparition de phénomènes de cavitation.

Cet inconvénient est particulièrement gênant dans le domaine ferroviaire, car le kilométrage parcouru par un véhicule entre deux opérations de grand entretien est généralement considérable, si bien que la durée d'action efficace des amortisseurs est bien souvent inférieure à la durée entre deux révisions successives. Le brevet GB-A-1 269 055 décrit un dispositif d'étanchéité pour dissipateur hydraulique d'énergie qui comprend une couronne cylindrique entourant la tige de piston et pourvue sur sa surface interne d'aspérités de façon à adhérer assez fortement sur la tige. Les débattements de la couronne s'effectuent entre deux butées. Mais ce dispositif n'est capable que d'une très faible course et donc les débattements de ce type de joint sont nettement insuffisants pour éviter son glissement par rapport à la tige de piston et une usure prématurée.

L'invention qui remédie à de tels inconvénients s'applique donc à un dissipateur hydraulique d'énergie, du type télescopique comprenant :

un cylindre de travail rempli de liquide et partagé en deux chambres par un piston muni de clapets tarés déterminant la résistance hydraulique, et dont la tige est guidée à travers l'un des fonds du cylindre,

une chambre annulaire de compensation entourant le cylindre de travail, communiquant par une valve et un clapet taré avec la chambre de travail opposée à la tige du piston.

Le dispositif d'étanchéité est constitué par un joint d'étanchéité pour la sortie de tige de piston, disposé dans un logement prolongeant le cylindre de travail côté tige et qui comprend une couronne cylindrique qui enserre la tige du piston.

Selon l'invention, la couronne cylindrique se prolonge par un soufflet étanche coaxial à ladite tige, permettant un débattement axial du joint dans son logement.

L'invention sera mieux comprise à l'aide de la description suivante se rapportant à des modes de réalisation particuliers donnés à titre d'exemples et en se référant aux dessins annexés qui représentent :

Figure 1 une coupe axiale d'un dissipateur hydraulique d'énergie muni du dispositif d'étanchéité conforme à l'invention.

Figure 2 une ocupe axiale partielle d'une variante de réalisation de l'invention.

Figure 3 une coupe axiale partielle d'une seconde variante de réalisation.

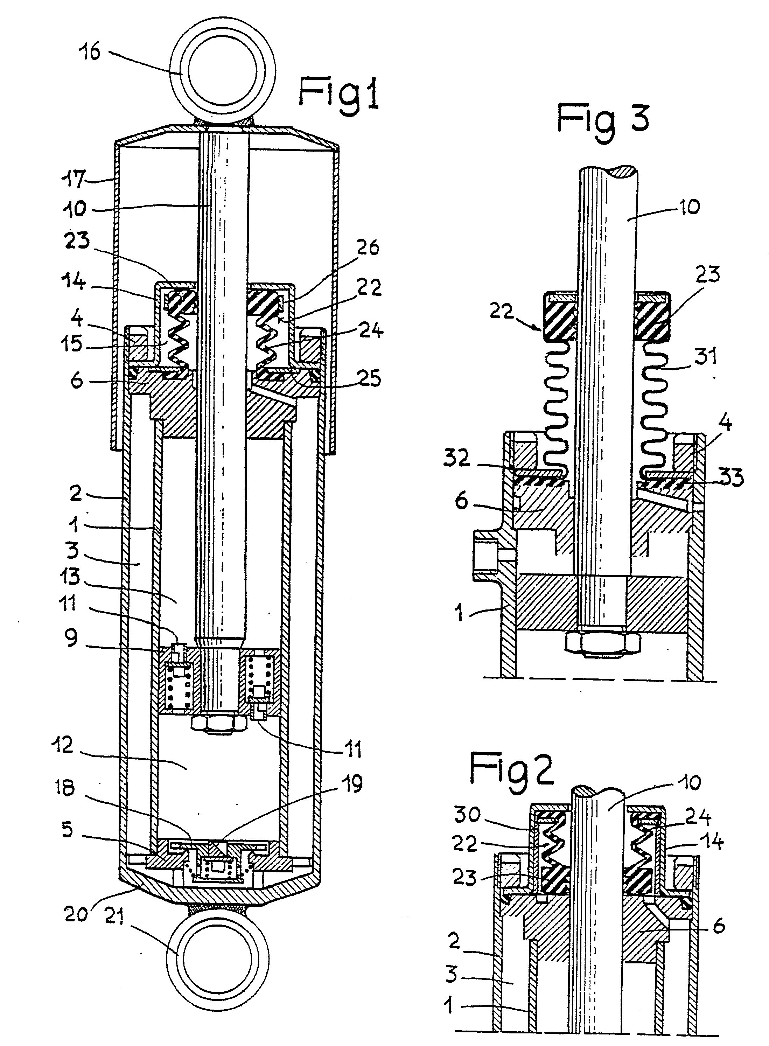

En se reportant tout d'abord à la figure 1, le dissipateur d'énergie comporte un cylindre de travail 1, entouré d'un tube coaxial 2, formant avec lui une chambre annulaire 3. Le cylindre de travail 1 est obturé par un fond inférieur 5 et par un fond supérieur 6 constituant le contrepiston. Un piston 9, coulissant à l'intérieur du cylindre de travail 1 et fixé sur une tige 10, comporte deux clapets 11 inversés et tarés. Ce piston 9 partage le cylindre de travail 1 en deux chambres 12 et 13.

La tige 10 traverse le contrepiston 6 par un orifice qui constitue un simple guidage, à jeu très réduit, mais sans étanchéité. Un bouchon 14 maintenu sur le contrepiston 6 par un écrou 4 vissé dans la partie supérieure du tube 2, forme avec ledit contrepiston un logement 15 pour le montage d'un dispositif d'étanchéité s'appliquant sur la tige de piston. Cette tige 10 est pourvue, à son extrémité extérieure, d'une attache 16 et d'un boîtier de protection 17. Le fond inférieur du cylindre de travail 1 comporte une valve 18 ouvrant de larges passages au liquide de la chambre annulaire 3 vers la chambre de travail 12 lors de l'aspiration du piston 9 et par un clapet 19 qui inversement ouvre un passage restreint vers la chambre annulaire 3.

Le tube 2 est fermé hermétiquement par une cuvette 20 portant l'attache inférieure 21.

Dans le logement 15 est monté un joint d'étanchéité 22 formé par une couronne cylindrique 23 qui par frottement adhère assez fortement sur la tige 10 et qui se prolonge par un soufflet étanche 24, dont le dernier pli est fixé par une rondelle 25 sur son siège prévu dans le contrepiston 6. L'intérieur du soufflet 24 communique librement par de larges ouvertures avec la chambre annulaire 3.

La face supérieure de la couronne cylindrique 23 est légèrement bombée pour éviter l'effet de ventouse entre cette couronne et le bouchon 14. On peut également prévoir des aspérités en relief sur cette face supérieure toujours pour éviter l'effet de ventouse.

D'autre part, sur la face latérale de la couronne cylindrique 23 est montée une bague de serrage 26 afin d'empêcher le gonflement du joint sous l'effet de la température. Cette bague de serrage peut éventuellement être moulée directement dans la couronne du joint.

Pendant les mouvements de la tige 10, la couronne cylindrique 23 du joint 22 qui par frottement adhère assez fortement sur la tige 10, suit d'abord celle-ci sans glisser en étirant le soufflet 24 jusqu'à venir éventuellement buter sur le fond du bouchon 14 dans le cas d'un mouvement d'extension dépassant une certaine amplitude et, ensuite seulement, si le mouvement continue plus loin, la couronne 23 commence à coulisser sur la tige 10. En sens contraire, dans le cas d'un mouvement de compression, la couronne 23 du joint est entraînée par frottements vers le bas. Le soufflet étanche 24 permet donc un débattement plus important qu'avec un joint usuel du type à membrane.

Dans le cas d'oscillations de petites amplitudes, qui représentent de très loin la grande majorité des mouvements, la couronne 23 du joint 22 reste collée sur la tige 10, en suivant ses mouvements sans glisser. Or, l'usure du joint étant causée uniquement par les glissements, il n'y aura donc pas dans ce cas d'usure. Ainsi, le joint ne s'usera que lors des mouvements de plus grandes amplitudes qui sont très peu nombreux, et de ce fait il aura une longévité exceptionnellement grande. Un autre avantage encore pour ce dissipateur est l'élimination des vibrations et trépidations transmises habituellement à la partie suspendue du fait des frottements du joint durant les petites oscillations. Lors des oscillations de plus grandes amplitudes, la valeur relative des forces de frottements par rapport à la réaction hydraulique, qui s'amorce d'ailleurs progressivement, devient négligeable, d'où une grande douceur de fonctionnement dans tous les cas.

Dans la variante du dissipateur selon la figure 2, la couronne 23 du joint 22 est orientée vers le bas et le dernier pli du soufflet 24 est fixé de façon étanche à la partie supérieure du logement 15 sur le bouchon 14 par une rondelle d'appui 30. La face active du joint est donc orientée vers l'intérieur et communique par de très larges passages avec la chambre annulaire 3, dont la faible pression, quelle qu'elle soit, d'air ou de liquide, s'exerce à l'extérieur du joint 22, et tend, par conséquent, à le serrer contre la tige 10, ce qui peut parfois présenter un avantage d'un service encore plus long, notamment dans le cas d'oscillations relativement plus grandes.

A la figure 3, le joint d'étanchéité 22 se compose également d'une couronne cylindrique 23 sertie à la partie supérieure d'un soufflet métallique 31 dont le dernier pli est fixé sur le contrepiston 6 par l'écrou 4 au moyen d'un joint d'étanchéité 32 et d'une rondelle 33.

Bien entendu l'invention n'est pas strictement limitée aux modes de réalisation qui ont été décrits à titre d'exemples, mais elle couvre également les réalisations qui n'en différeraient que par des détails, par des variantes d'exécution ou par l'utilisation de moyens équivalents. Ainsi pour assurer dans tous les cas la possibilité d'un débattement axial du joint sans glissement sur la tige de piston, on pourrait aussi prévoir des soufflets de forme hélicoïdale, armés ou non de fils métalliques formant ressort, ou encore pourvus d'embouts en tube élastique permettant des déformations axiales.

**Revendications**

1. Dispositif d'étanchéité pour dissipateur hydraulique d'énergie du type télescopique comprenant :

un cylindre de travail (1) rempli de liquide et partagé en deux chambres (12, 13) par un piston (9) muni de clapets tarés (11) déterminant la résistance hydraulique, et dont la tige (10) est guidée à travers l'un des fonds dudit cylindre,

une chambre annulaire de compensation (3) entourant le cylindre de travail, communiquant par une valve (18) et un clapet taré (19) avec la chambre de travail opposée à la tige du piston, ledit dispositif d'étanchéité étant constitué par un joint d'étanchéité (22) pour la sortie de tige du piston, disposé dans un logement prolongeant le cylindre de travail côté tige, comprenant une couronne cylindrique (23) qui enserre la tige (10) du piston, caractérisé en ce que ladite couronne cylindrique se prolonge par un soufflet étanche (24-31), coaxial à ladite tige, permettant un débattement axial du joint dans son logement (15).

2. Dispositif d'étanchéité selon la revendication 1, caractérisé par le fait que la face supérieure de la couronne cylindrique (23) est légèrement bombée.

3. Dispositif d'étanchéité selon la revendication 1, caractérisé par le fait que la face supérieure de la couronne cylindrique (23) comporte des aspérités en relief.

4. Dispositif d'étanchéité selon la revendication 1, caractérisé par le fait que sur la face latérale de la couronne cylindrique (23) est montée une bague de serrage (26).

5. Dispositif d'étanchéité selon la revendication 4, caractérisé par le fait que la bague de serrage (26) est directement moulée dans la couronne cylindrique (23) du joint (22).

6. Dispositif d'étanchéité selon la revendication 1, caractérisé par le fait que le dernier pli du soufflet (24) est fixé de façon étanche sur l'une ou l'autre des faces extrêmes du logement (15).

7. Dispositif d'étanchéité selon la revendication 1, caractérisé par le fait que le soufflet étanche est un soufflet métallique (31) à la partie supérieure duquel est sertie la couronne cylindrique (23) du joint d'étanchéité (22).

8. Dispositif d'étanchéité selon la revendication 1, caractérisé par le fait que le soufflet étanche (24) est un soufflet de forme hélicoïdale.

**Claims**

1. Sealing device for a hydraulic energy dissipator of the telescopic type, comprising :
a working cylinder (1) filled with liquid and divided into two chambers (12, 13) by a plunger (9) equipped with calibrated flap valves (11) determining the hydraulic resistance, and whose rod (10) is guided through one of the ends of the said cylinder,
an annular compensation chamber (3) surrounding the working cylinder, communicating with the working chamber opposite to the plunger rod via a valve (18) and calibrated flap valve (19) the said sealing device consisting of a seal (22) for the outlet of the plunger rod, arranged in a housing extending the working cylinder on the rod side, comprising a cylindrical crown ring (23) which clamps round the plunger rod (10), characterized in that the said cylindrical crown ring is extended by a leakproof bellows (24-31), coaxial with the said rod, permitting an axial displacement of the seal in its housing (15).

2. Sealing device according to Claim 1, characterized in that the upper face of the cylindrical crown ring (23) is slightly convex.

3. Sealing device according to Claim 1, characterized in that the upper face of the cylindrical crown ring (23) comprises asperities in relief.

4. Sealing device according to Claim 1, characterized in that a clamping ring (26) is mounted on the side face of the cylindrical crown ring (23).

5. Sealing device according to Claim 4, characterized in that the clamping ring (26) is moulded directly into the cylindrical crown ring (23) of the seal (22).

6. Sealing device according to Claim 1, characterized in that the last fold of the bellows (24) is fastened in a leakproof manner to either of the outermost faces of the housing (15).

7. Sealing device according to Claim 1, characterized in that the leakproof bellows is a metal bellows (31) to the upper part of which the cylindrical crown ring (23) of the seal (22) is crimped.

8. Sealing device according to Claim 1, characterized in that the leakproof bellows (24) is a bellows of helicoidal shape.

**Patentansprüche**

1. Dichtvorrichtung für einen hydraulischen Energiedämpfer vom Teleskoptyp mit :
einem flüssigkeitsgefüllten Arbeitszylinder (1), der in zwei Kammern (12, 13) unterteilt ist durch einen Kolben (19), der mit den hydraulischen Widerstand bestimmenden, austarierten Ventilklappen (11) versehen ist und dessen Stange (10) durch einen der Böden des genannten Zylinders geführt ist,
eine ringförmige Kompensationskammer (3), welche den Arbeitszylinder umgibt und über ein Ventil (18) sowie eine austarierte Ventilklappe (19) mit der der Kolbenstange gegenüberliegenden Arbeitskammer in Verbindung steht,
wobei diese Dichtvorrichtung durch eine Dichtung (22) für den Austritt der Kolbenstange gebildet ist, welche in einem Aufnahmeraum angeordnet ist, der den Arbeitszylinder auf der Seite der Stange verlängert, mit einem zylindrischen Kranz (23), welcher die Stange (10) des Kolbens umspannt, dadurch gekennzeichnet, daß der genannte zylindrische Kranz durch einen dichten Balg (24-31) verlängert ist, der koaxial zu der genannten Stange ist und eine Axialauslenkung der Dichtung in ihrem Aufnahmeraum (15) zuläßt.

2. Dichtvorrichtung nach Anspruch 1, dadurch gekennzeichnet, daß die Oberseite des zylindrischen Kranzes (23) schwach gewölbt ist.

3. Dichtvorrichtung nach Anspruch 1, dadurch gekennzeichnet, daß die Oberseite des zylindrischen Kranzes (23) reliefartige Unebenheiten aufweist.

4. Dichtvorrichtung nach Anspruch 1, dadurch gekennzeichnet, daß auf der Seitenfläche des zylindrischen Kranzes (23) ein Spannring (26) angebracht ist.

5. Dichtvorrichtung nach Anspruch 4, dadurch gekennzeichnet, daß der Spannring (26) direkt in den zylindrischen Kranz (23) der Dichtung (22) eingeformt ist.

6. Dichtvorrichtung nach Anspruch 1, dadurch gekennzeichnet, daß die letzte Falte des Balges (24) dicht an der einen oder anderen Endfläche des Aufnahmeraumes (15) befestigt ist.

7. Dichtvorrichtung nach Anspruch 1, dadurch gekennzeichnet, daß der dichte Balg ein metallischer Balg (31) ist, an dessen oberem Teil der zylindrische Kranz (23) der Dichtung (22) verstemmt ist.

8. Dichtvorrichtung nach Anspruch 1, dadurch gekennzeichnet, daß der dichte Balg (24) ein schraubenförmiger Balg ist.

0 117 203

Fig 1

Fig 3

Fig 2

1